# EUROPÄISCHE PATENTSCHRIFT

(11) **EP 3 359 288 B1**
(45) Veröffentlichungstag und Bekanntmachung des Hinweises auf die Patenterteilung: **13.04.2022**
(21) Anmeldenummer: 16778013.9
(22) Anmeldetag: 06.10.2016
(51) Int. Cl.: B01J 8/06

(54) **REAKTOR-VORRICHTUNG ZUM DEHYDRIEREN EINES TRÄGERMEDIUMS**
REACTOR DEVICE FOR DEHYDRATING A CARRIER MEDIUM
DISPOSITIF RÉACTEUR DESTINÉ À LA DÉSHYDROGÉNATION D'UN MILIEU VECTEUR

(30) Priorität: 06.10.2015 DE 102015219305
(43) Veröffentlichungstag der Anmeldung: 15.08.2018
(73) Patentinhaber: HYDROGENIOUS LOHC TECHNOLOGIES GMBH, 91058 Erlangen (DE)
(72) Erfinder: RATHKE, Jonas, 82377 Penzberg (DE); KUSCHE, Matthias, 90571 Schwaig (DE); WESTERATH, Federico, 90518 Altdorf (DE); MELCHER, Berthold, 91052 Erlangen (DE); RANDIG, Cornelius, 91058 Erlangen (DE)
(74) Vertreter: Rau, Schneck & Hübner Patentanwälte Rechtsanwälte PartGmbB
(86) Internationale Anmeldenummer: PCT/EP2016/073896
(87) Internationale Veröffentlichungsnummer: WO 2017/060361

(56) Entgegenhaltungen:
- WO-A1-02/02220
- WO-A1-2004/052776
- WO-A1-2006/109095
- FR-A- 1 192 370
- US-A- 2 986 454
- US-A- 5 266 281

## Beschreibung

Die Erfindung betrifft eine Reaktor-Vorrichtung zum Dehydrieren eines Trägermediums.

Aus der US 5,266,281 A, der WO 02/022 20 A1, der FR 1 192 370 A, der WO 2006/109 095 A1, der WO 2004/052 776 A1 und der US 2,986,454 A sind katalytische Reaktoren beispielsweise für die Dampfreformierung von Kohlenwasserstoffverbindungen bekannt. Um eine aufsteigende Gasströmung innerhalb des Reaktors zu ermöglichen, sind die Reaktoren mit ihrer Längsachse vertikal orientiert.

Die Dehydrierreaktion eines Trägermediums ist endotherm, d. h. es muss Wärme zugeführt werden. Dies kann mittels eines Rohrbündelreaktors erfolgen, um ein für einen Wärmeeintrag erforderliches Verhältnis von Oberfläche zu Volumen des Reaktors zu ermöglichen. Das Verhältnis von Oberfläche zu Volumen ist umso größer, also umso besser, je geringer der jeweilige Rohrdurchmesser ist. Ein geringer Rohrdurchmesser bedeutet aber einen reduzierten Rohrquerschnitt, sodass die Freisetzung von Wasserstoffgas behindert ist.

Der Erfindung liegt die Aufgabe zugrunde, eine Reaktor-Vorrichtung zum Dehydrieren eines Trägermediums zu verbessern, wobei insbesondere bei ausreichendem Wärmeeintrag die Freisetzung von Wasserstoffgas im Wesentlichen ungehindert ermöglicht sein soll.

Die Aufgabe wird durch die Merkmale des Anspruchs 1 gelöst. Der Kern der Erfindung besteht darin, dass ein von einem Reaktorgehäuse umschlossener Innenraum mindestens einen Reaktionsraum aufweist, der mit einem Vorraum verbunden ist. Der Vorraum weist mindestens eine erste Verbindungsöffnung auf. Über die mindestens eine erste Verbindungsöffnung ist der Vorraum mit jeweils einem Reaktionsraum verbunden. Es ist auch denkbar, dass über die mindestens eine erste Verbindungsöffnung mehrere Reaktionsräume mit dem Vorraum verbunden sind, beispielsweise indem zwischen der ersten Verbindungsöffnung und den mehreren Reaktionsräumen ein Verteilerraum angeordnet ist. Die mindestens eine erste Verbindungsöffnung dient zum Abströmen eines Trägermediums aus dem Vorraum in den damit verbundenen Reaktionsraum. Der Vorraum weist zudem eine Zuströmöffnung auf, die zum Zuströmen von beladenem Trägermedium in den Vorraum dient. Das Trägermedium ist insbesondere eine organische Wasserstoffspeicherflüssigkeit in Form eines zyklischen Kohlenwasserstoffs. Das Trägermedium ist ein Wasserstoff-Trägermedium. An dem Trägermedium kann Wasserstoff chemisch gebunden sein. Das Trägermedium ist flüssig. Ein derartiges Trägermedium ist beispielsweise unter der Bezeichnung Liquid Organic Hydrogen Carrier (LOHC) bekannt. Die Reaktor-Vorrichtung weist ein Reaktorgehäuse auf. Zwischen dem Reaktorgehäuse und dem Reaktionsraum ist ein Wärmeübertragungsraum angeordnet. Ein Wärmeübertragungsmedium in dem Wärmeübertragungsraum dient zum Wärmeübertragen von dem Wärmeübertragungsmedium auf das Trägermedium. Der Wärmeübertragungsraum ist insbesondere ein Zwischenraum zwischen dem mindestens einen Reaktionsraum und dem Reaktorgehäuse. Über den Vorraum kann das zumindest anteilig mit Wasserstoffgas beladene Trägermedium in den Reaktionsraum gelangen, wobei insbesondere ein Abstand der Zuströmöffnung zu der mindestens einen Verbindungsöffnung auf die Strömung des Trägermediums, insbesondere auf deren Strömungsgeschwindigkeit, im Wesentlichen keinen Einfluss hat. Mittels des Vorraums ist eine gezielte und kontrollierte Zuleitung des Trägermediums in den Reaktionsraum möglich.

Die Reaktor-Vorrichtung mit mehreren, jeweils einen Reaktionsraum aufweisenden, Reaktionsrohren, insbesondere mindestens fünf, insbesondere mindestens 10, insbesondere mindestens 20, insbesondere mindestens 50, insbesondere mindestens 100 und insbesondere mindestens 120, die jeweils über eine erste Verbindungsöffnung mit dem Vorraum verbunden sind, ermöglicht eine unmittelbare, insbesondere lineare, Skalierung der Reaktorleistung. Es können auch mehr als 120 Reaktionsrohre vorgesehen sein. Der Wärmeübertragungsraum ist insbesondere als Zwischenraum zwischen den Reaktionsrohren und dem Reaktorgehäuse ausgeführt. Durch das Zuführen des Trägermediums über den Vorraum ist eine gleichmäßige, insbesondere identische, Beaufschlagung aller Reaktionsrohre mit Trägermedium gewährleistet. Dadurch sind die Strömungsverhältnisse in dem Vorraum und in den daran angeschlossenen Reaktionsrohren homogenisiert und dadurch verbessert. Die Reaktor-Vorrichtung weist verbesserte Strömungsbedingungen bei gutem Wärmeeintrag auf. Ein im Vorraum herrschender Innendruck kann gleichmäßig auf alle Reaktionsräume verteilt aufgebracht werden. Druckunterschiede zwischen den Reaktionsräumen sind im Vergleich zu dem Innendruck im Vorraum klein und haben somit keinen Einfluss auf die Reaktionen in den Reaktionsrohren. Der Druckunterschied zwischen dem Innendruck im Vorraum und den jeweiligen Drücken in den Reaktionsräumen ist im Wesentlichen konstant. Insbesondere sind alle Reaktionsrohre identisch ausgeführt. Die Rohre sind insbesondere als Zylinderrohre ausgeführt. Es sind aber auch andere Hohlprofilformen möglich, wie beispielsweise eine quadratische, eine rechteckförmige, eine dreieckige, eine fünfeckige, eine sechseckige oder eine andere polygonförmige Kontur. Die Rohre können auch eine Ovalkontur aufweisen. Es ist grundsätzlich auch denkbar, dass die Rohre unterschiedlich, insbesondere mit unterschiedlicher Kontur und/oder mit unterschiedlicher Querschnittsgröße, ausgeführt sind.

Die Reaktionsrohre sind horizontal orientiert.

Eine Reaktor-Vorrichtung, bei der die mindestens eine erste Verbindungsöffnung einen Innendurchmesser aufweist, der kleiner ist als ein Innendurchmesser des damit verbundenen Reaktionsrohres, gewährleistet insbesondere, dass Rückvermischungen aus den Reaktionsrohren in den Vorraum und/oder Bypass-Strömungen zwischen den einzelnen Reaktionsrohren vermieden sind. Insbesondere beträgt der Innendurchmesser der ersten Verbindungsöffnung höchstens 50 % des Innendurchmessers des damit verbundenen Reaktionsrohres, insbesondere höchstens 40 %, insbesondere höchstens 30 % und insbesondere höchstens 25 %. Aufgrund des Durchmesserverhältnisses ist gewährleistet, dass ein Druckverlust in jedem Betriebspunkt beispielsweise größer ist als 1.000 mbar. Diese definierte Druckbeaufschlagung bewirkt, dass der Einfluss eines geodätischen Druckunterschiedes an verschiedenen ersten Verbindungsöffnungen, insbesondere zwischen einer maximal oben und einer maximal unten bezogen auf eine vertikale Richtung angeordneten ersten Verbindungsöffnung im Wesentlichen vernachlässigbar ist. Der Einfluss des geodätischen Druckunterschiedes ist minimiert. Die Gleichverteilung des Trägermediums in die Reaktionsrohre ist verbessert. Vorteilhaft ist eine in dem Vorraum angeordnete Heizeinheit, um das Trägermedium direkt und unmittelbar in dem Vorraum zu erhitzen. Dadurch ist gewährleistet, dass die Temperatur des Trägermediums im Vorraum einen erforderlichen Temperaturmindestwert aufweist. Dadurch ist gewährleistet, dass die Viskosität des Trägermediums einen erforderlichen Maximalwert nicht überschreitet, der von der Temperatur abhängig ist. Dadurch ist gewährleistet, dass der Druckverlust nicht zu groß ist und das Trägermedium ungehindert von dem Vorraum in die Reaktionsrohre strömen kann. Dadurch ist eine schnelle Nutzung der Reaktorvorrichtung ohne vorherigen Betrieb, ein sogenannter Kaltstart, möglich, indem das im Vorraum vorhandene Trägermedium vorgewärmt wird. Die Heizeinheit ist insbesondere im Bereich der Durchgangsöffnungen und/oder der ersten Verbindungsöffnungen angeordnet. Damit kann die Wärme genau dort eingebracht werden, wo sie für die Zuströmung des Trägermediums in die Reaktionsrohre erforderlich ist. Vorteilhaft ist es, wenn die Heizeinheit derart ausgeführt ist, dass die Wärme großflächig, insbesondere über den gesamten Querschnitt der Reaktorvorrichtung gleichmäßig verteilt, in das Trägermedium eingebracht werden kann. Beispielsweise weist die Heizeinheit rohrförmige Wärmeübertragerelemente, insbesondere in Form von Wärmeträgeröl-durchströmten Rohren, auf. Die Wärmeübertragerelemente können auch elektrische Heizstäbe oder Teil einer externen Kreislaufströmung sein, die erwärmtes Trägermedium durch eine Eintrittsöffnung in den Vorraum zuführt und über eine Austrittsöffnung Trägermedium aus dem Vorraum abführt.

Eine Reaktorvorrichtung, bei der das mindestens eine Reaktionsrohr parallel zu einer Längsachse des Reaktorgehäuses orientiert ist, gewährleistet eine vorteilhafte und insbesondere platzsparende Anordnung des Reaktionsrohrs im Reaktorgehäuse. Insbesondere weist die Reaktor-Vorrichtung an einer Außenseite des Reaktorgehäuses Fußelemente auf, die ein Abstellen der Reaktor-Vorrichtung auf einer Unterlage ermöglichen. Zusätzlich oder alternativ können Befestigungsvorrichtungen vorgesehen sein, um das Reaktorgehäuse beispielsweise seitlich und/oder von oben aufzuhängen. Die Befestigungselemente und/oder die Fußelemente sind derart ausgeführt, dass eine Ausrichtung der Reaktorvorrichtung derart möglich ist, dass die Längsachse des Reaktorgehäuses im Wesentlichen horizontal orientiert ist.

Eine Reaktorvorrichtung, bei der die mindestens eine erste Verbindungsöffnung in einem Verbindungselement integriert ausgeführt ist, ermöglicht eine vereinfachte Ausführung der ersten Verbindungsöffnung. Die erste Verbindungsöffnung ist Bestandteil des Verbindungselements. Insbesondere ist das Verbindungselement stirnseitig mit dem Reaktionsrohr verbunden. Das Verbindungsrohr ist insbesondere stirnseitig in das Reaktionsrohr eingesteckt. Das Verbindungselement kann als Bolzen ausgeführt sein, der in das Reaktionsrohr, zumindest anteilig, eingeführt ist.

Eine Reaktor-Vorrichtung, bei der das Verbindungselement bezüglich der Längsachse des Reaktorgehäuses mittels einer Halteplatte fixiert ist, gewährleistet eine zuverlässige und unkomplizierte Integration der Verbindungsöffnung zwischen dem Vorraum und dem Reaktionsrohr. Insbesondere ermöglicht die Halteplatte eine unmittelbare Fixierung mehrerer Verbindungselemente an dem jeweils zugeordneten Reaktionsrohr.

Eine Reaktor-Vorrichtung mit einem Nachraum, der eine Abströmöffnung zum Abströmen von zumindest teilweise entladenem Trägermedium aus dem Nachraum und der mindestens eine zweite Verbindungsöffnung zum Zuströmen des entladenen Trägermediums aus dem Reaktionsrohr in den Nachraum aufweist, ermöglicht ein kontrolliertes Abführen des Trägermediums.

Eine Reaktorvorrichtung, bei der das Reaktionsrohr über die mindestens zweite Verbindungsöffnung mit dem Nachraum verbunden ist, ermöglicht eine unmittelbare, direkte Strömung des entladenen Trägermediums in den Nachraum.

Eine Reaktor-Vorrichtung, bei der die mindestens eine zweite Verbindungsöffnung eine Querschnittsfläche aufweist, die kleiner ist als eine Querschnittsfläche des damit verbundenen Reaktionsrohres gewährleistet, dass ein Anteil des Trägermediums in dem Reaktionsrohr verbleibt.

Dadurch ist gewährleistet, dass das Reaktionsrohr dauerhaft mit einem einstellbaren Füllstand mit dem Trägermedium gefüllt ist. Insbesondere beträgt die Querschnittsfläche der zweiten Verbindungsöffnung höchstens 60 % der Querschnittsfläche des Reaktionsrohres, insbesondere höchstens 55 %, insbesondere höchstens 50 % und insbesondere höchstens 45 %. Beispielsweise kann die Querschnittsfläche der zweiten Verbindungsöffnung im Wesentlichen halbkreisscheibenförmig ausgeführt sein. Gleichzeitig garantiert die zweite Verbindungsöffnung, dass das während der Dehydrierreaktion freigesetzte Wasserstoffgas über die zweite Verbindungsöffnung in den Nachraum entweichen kann.

Eine Reaktor-Vorrichtung, bei der die mindestens eine zweite Verbindungsöffnung in einem Abdeckelement integriert ausgeführt ist, ist die Integration der zweiten Verbindungsöffnung in der Reaktor-Vorrichtung vereinfacht. Das Abdeckelement ist insbesondere stirnseitig mit dem Reaktionsrohr verbunden und insbesondere stirnseitig an dem Reaktionsrohr anliegend ausgeführt.

Das Abdeckelement ist insbesondere ein Wehr, das derart ausgeführt ist, dass das mindestens eine Reaktionsrohr anteilig verschlossen ist.

Eine Reaktor-Vorrichtung mit einem der mindestens einen zweiten Verbindungsöffnung zugeordneten Abscheideelement gewährleistet eine Vorabscheidung von Trägermedium, also von Flüssigkeit, die von freigesetztem Wasserstoffgas aufgrund von Trägheitseffekten aus dem Reaktionsrohr mitgerissen worden ist. Das Risiko, dass unbeabsichtigt in dem Wasserstoffgasstrom mitgerissenes Trägermedium geführt wird, ist reduziert. Das Abscheideelement kann als Lamellenblech, insbesondere im Bereich der mindestens einen zweiten Verbindungsöffnung, angeordnet sein. Dadurch ist eine Vorabscheidung von Flüssigkeitstropfen verbessert.

Eine zusätzliche Verbesserung der mitgerissenen Trägermediumpartikel aus dem Wasserstoffgas ist dadurch möglich, dass das Wasserstoffgas vor dem Verlassen des Reaktorgehäuses mindestens einfach, insbesondere mehrfach, entlang der Strömungsrichtung umgelenkt wird. Dazu kann ein Strömungsumlenkelement im Bereich der Abscheide-Öffnung angeordnet sein. Beispielsweise ist das Strömungsumleitelement ein mäanderförmig ausgeführter Rohrabschnitt, der mit der Abscheide-Öffnung verbunden ist. Durch das Strömungsumleitelement wird die Strömung des Wasserstoffgasstroms mehrfach umgeleitet. Infolge der Trägheit der Flüssigkeitstropfen werden diese aus dem Gasstrom abgeschieden. Eine zusätzliche Erhöhung des Abscheidegrades kann mittels eines Barriereelements in Form eines engmaschigen Drahtgestrickes erfolgen, das insbesondere quer oder senkrecht zur Strömungsrichtung des Wasserstoffgases angeordnet ist. Das Drahtgestrick ist insbesondere derart ausgeführt, dass es für das Wasserstoffgas keinen oder nahezu keinen Strömungswiderstand bietet.

Das engmaschige Drahtgestrick ist insbesondere im Nachraum angeordnet und ermöglicht ein selbsttätiges Abtropfen in das im Bodenbereich des Nachraumes angeordnete Trägermedium.

Das Abscheideelement ist insbesondere bezüglich der Längsachse fluchtend zu der mindestens einen zweiten Verbindungsöffnung angeordnet.

Eine Reaktor-Vorrichtung, bei der das Abscheideelement an dem Abdeckelement befestigt ist, vereinfacht die Anbringung und insbesondere deren Anbringung und deren ausgerichtete Anordnung zueinander. Insbesondere ist das Abscheideelement an einer dem Reaktionsrohr abgewandten Stirnseite des Abdeckelements befestigt, insbesondere verschweißt. Das Abscheideelement kann mit dem Abdeckelement, insbesondere durch eine Schraubverbindung, auch trennbar verbunden sein. Die Herstellung des Abdeckelements und/oder des Abscheideelements ist dadurch vereinfacht. Wasserstoffgas kann aus dem Reaktionsrohr durch die zweite Verbindungsöffnung in dem Abdeckelement zu dem Abscheideelement strömen. An dem Abscheideelement werden Flüssigkeitsanteile des Trägermediums abgeschieden.

Eine Reaktor-Vorrichtung, bei der das Abscheideelement bezüglich der Längsachse des Reaktorgehäuses mit einem Neigungswinkel angeordnet ist gewährleistet eine gezielte Strömungsumleitung des Wasserstoffgases. Aufgrund des geneigt angeordneten Abscheideelements wird das Wasserstoffgas insbesondere vertikal nach unten umgelenkt und dadurch insbesondere abschnittsweise nach unten beschleunigt. Dadurch werden Flüssigkeitsanteile des Trägermediums in dem Wasserstoffgasstrom verbessert abgeschieden. Der Neigungswinkel ist insbesondere größer als 0° und kleiner als 90°. Der Neigungswinkel beträgt insbesondere zwischen 10° und 60° und insbesondere zwischen 20° und 45°.

Eine Reaktor-Vorrichtung, bei der in dem Reaktionsrohr ein Dehydrierkatalysator vorgesehen ist, begünstigt die Dehydrierreaktion.

Eine Reaktor-Vorrichtung, bei der eine Trägermedium-Strömungsrichtung und eine Wärmeübertragungs-Strömungsrichtung zumindest abschnittsweise über Kreuz/im rechten Winkel zueinander orientiert sind, ermöglicht einen verbesserten Wärmeübertrag. Die Gesamtströmungsrichtung in der Reaktor-Vorrichtung ist vorteilhafter Weise der Gleichstrom. Zusätzlich können Fixierungen vorgesehen sein, die als Umlenkelemente dienen. Insbesondere im Bereich der Umlenkelemente ist dann eine Kreuzströmung gegeben. Es ist grundsätzlich auch Gegenstrom oder eine Mischform der genannten Strömungsarten möglich.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine Seitenansicht einer erfindungsgemäßen Reaktor-Vorrichtung,
- Fig. 2: eine Schnittdarstellung gemäß Schnittlinie II-II in Fig. 1,
- Fig. 3: eine Schnittdarstellung gemäß Schnittlinie III-III in Fig. 1,
- Fig. 4: einen Längsschnitt der Reaktor-Vorrichtung gemäß Fig. 1,
- Fig. 5: eine vergrößerte Detaildarstellung gemäß Detail V in Fig. 4,
- Fig. 6: eine vergrößerte Detaildarstellung gemäß Detail VI in Fig. 4,
- Fig. 7: eine vergrößerte Seitenansicht einer Abscheideelement-Platte der Reaktor-Vorrichtung,
- Fig. 8: eine Draufsicht der Abscheideelement-Platte gemäß Fig. 7,
- Fig. 9: eine vergrößerte Ansicht einer Abdeckelement-Platte gemäß der Reaktor-Vorrichtung,
- Fig. 10: eine Prinzipdarstellung der Betriebsweise im Gegenstromverfahren,
- Fig. 11: eine Fig. 10 entsprechende Darstellung des Gleichstromverfahrens,
- Fig. 12: eine Fig. 10 entsprechende Darstellung des Kreuzstromverfahrens,
- Fig. 13: eine Fig. 10 entsprechende Darstellung eines ersten Mischstromverfahrens und
- Fig. 14: eine Fig. 10 entsprechende Darstellung eines weiteren Mischstromverfahrens.

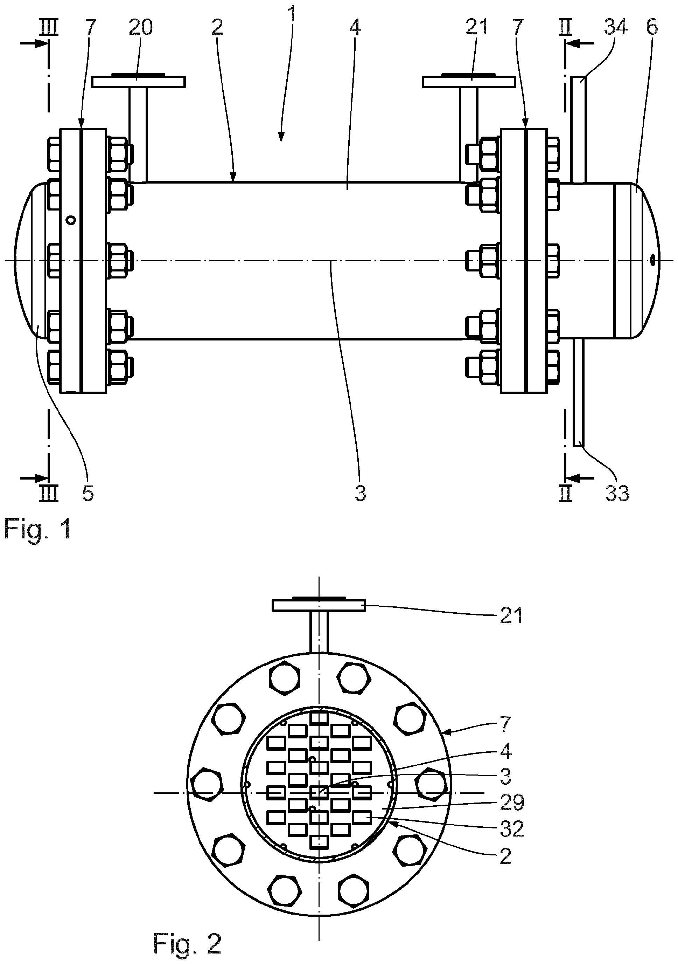

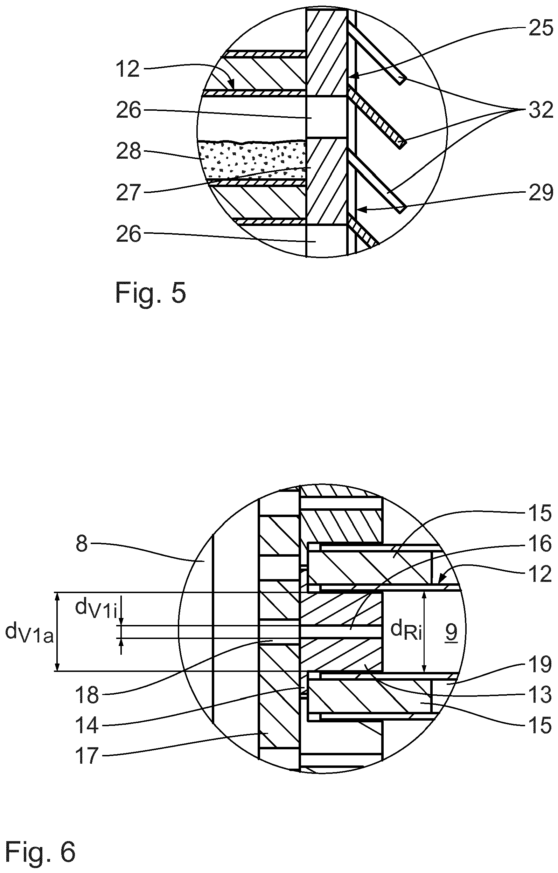

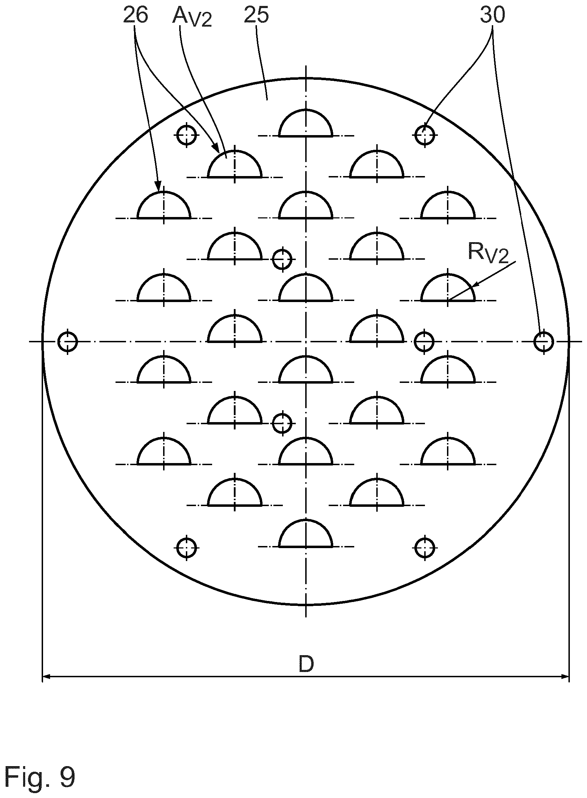

Eine in Fig. 1 bis 10 dargestellte Reaktor-Vorrichtung 1 dient zum Dehydrieren von LOHC, also zum Abtrennen von Wasserstoffgas von LOHC als Trägermedium.

Die Reaktor-Vorrichtung 1 weist ein Reaktorgehäuse 2 auf. Das Reaktorgehäuse 2 ist im Wesentlichen hohlzylindrisch ausgeführt mit einer Längsachse 3. Das Reaktorgehäuse 2 umfasst ein hohlzylindrisches Reaktionsgehäuse 4, das an einem ersten, in Fig. 1 links dargestellten Ende mittels eines Vorraumgehäuses 5 und an einem gegenüberliegenden, in Fig. 1 rechts dargestellten Ende mittels eines Nachraumgehäuses 6 verschlossen ist. Das Vorraumgehäuse 5 und das Nachraumgehäuse 6 sind im Wesentlichen deckelartig ausgeführt und jeweils über eine Flanschringverbindung 7 mit dem Reaktionsgehäuse 4 druckdicht und fluiddicht verbunden.

Das Reaktorgehäuse 2 umschließt einen Innenraum, der einen Vorraum 8, einen Reaktionsraum 9 und einen Nachraum 10 umfasst.

Der Vorraum 8 weist eine Zuströmöffnung 11 auf, über die beladenes Trägermedium in den Vorraum 8 gelangen kann. Die Zuströmöffnung 11 ist an einer Unterseite des Reaktorgehäuses 2 angeordnet. An der Zuströmöffnung 11 kann ein Einfüllstutzen vorgesehen sein, der über eine Zuführleitung mit einem LOHC-Tank verbunden sein kann.

Der Reaktionsraum 9 umfasst die Summe der Innenvolumina mehrerer Reaktionsrohre 12. Die Reaktionsrohre 12 sind parallel zueinander und parallel zur Längsachse 3 des Reaktorgehäuses 2 orientiert. Die Reaktionsrohre 12 sind horizontal angeordnet. Die Reaktionsrohre 12 weisen jeweils einen Innendurchmesser d_{Ri} auf. Gemäß dem gezeigten Ausführungsbeispiel sind vierundzwanzig Reaktionsrohre 12 vorgesehen. Es können auch mehr oder weniger als vierundzwanzig Reaktionsrohre vorgesehen sein. Je größer die Anzahl der Reaktionsrohre 12 ist, desto größer ist eine Dehydrierrate, also das Volumen von freigesetztem Wasserstoffgas pro Zeiteinheit. Der Reaktionsraum 9 entspricht also dem 24-fachen des Innenvolumens eines Reaktionsrohres 12. Zwei in vertikaler Richtung benachbart angeordnete Reaktionsrohre 12 weisen einen Abstand A zueinander auf. Der Abstand A kann auch in einer von der vertikalen Richtung abweichenden Richtung vorgesehen sein. Die Rohre 12 sind dann in einem regelmäßigen Raster zueinander angeordnet.

An einem dem Vorraum 8 zugewandten Ende ist in die Reaktionsrohre 12 jeweils stirnseitig ein Verbindungselement 13 eingeführt. Das Verbindungselement 13 ist bolzenartig ausgeführt, wobei ein Außendurchmesser d_{V1a} im Wesentlichen dem Innendurchmesser d_{Ri} des Reaktionsrohres 12 entspricht. Das Verbindungselement 13 weist einen scheibenartigen Anlageabschnitt 14 auf, mit dem das Verbindungselement 13 axial an der Stirnseite der Reaktionsrohre 12 gehalten ist. Ein unbeabsichtigtes Verlagern des Verbindungselements 13 entlang der Längsachse 3 zu den Reaktionsrohren 12 hin ist ausgeschlossen.

An einer dem Vorraum 8 zugewandten Stirnseite der Verbindungselemente 13 ist eine Halteplatte 17 angeordnet. Die Halteplatte 17 dient insbesondere zur axialen Fixierung der Verbindungselemente 13 an den Reaktionsrohren 12 entlang der Längsachse 3, insbesondere gegen ein unbeabsichtigtes axiales Verlagern zum Vorraum 8 hin. Die Halteplatte 17 weist mehrere, jeweils fluchtend mit den Verbindungsöffnungen 16 angeordnete Durchgangsöffnungen 18 auf. Die Durchgangsöffnung 18 gewährleistet, dass die erste Verbindungsöffnung 16 in dem Verbindungselement 13 frei liegt.

Die Halteplatte 17 ist in axialer Richtung, also entlang der Längsachse 3, stirnseitig an die Reaktionsrohre 12 angepresst. Dadurch werden die Verbindungselemente 13 mit dem Anlageabschnitt 14, der eine Anlageschulter bildet, stirnseitig auf die Reaktionsrohre 12 gepresst. Zwischen den Verbindungselementen 13 und einem Rohrboden 15 ist jeweils ein nicht dargestelltes Dichtungselement vorgesehen. Der Rohrboden 15 ist mit dem Reaktionsrohr 12 verschweißt. Das Dichtungselement gewährleistet eine zuverlässige Abdichtung der Verbindungselemente 13 in den Reaktionsrohren 12. Die Abstandshalter 15 werden auch als Rohrboden bezeichnet. Der Rohrboden ist ein integraler Bestandteil der Reaktor-Vorrichtung 1. Ein unerwünschter Austritt von Trägermedium aus den Reaktionsrohren 12 ist verhindert. Ein Rückströmen von Trägermedium aus den Reaktionsrohren 12 über die erste Verbindungsöffnung 16 in den Vorraum 8 ist aufgrund des Kapillareffektes im Wesentlichen ausgeschlossen.

Zwischen benachbarten Reaktionsrohren 12 sind Abstandshalter 15 angeordnet. Die Abstandshalter 15 können einzeln ausgeführt sein. Die Abstandshalter 15 können auch integral, insbesondere in Form einer Lochplatte, ausgeführt sein, in die die Reaktionsrohre 12 eingesteckt sind.

Das Verbindungselement 13 weist eine durchgehende Innenbohrung auf, die eine erste Verbindungsöffnung 16 darstellt. Die erste Verbindungsöffnung 16 ermöglicht eine Fluidverbindung zwischen dem Vorraum 8 und dem Reaktionsraum 9. Insbesondere ist jedem Reaktionsrohr 12 eine erste Verbindungsöffnung 16 zugeordnet. Die erste Verbindungsöffnung 16 weist einen Innendurchmesser d_{V1i} auf, der kleiner ist als der Innendurchmesser d_{Ri} des Reaktionsrohres 9. Gemäß dem gezeigten Ausführungsbeispiel gilt d_{V1i} = 0,05 · d_{Ri}. Vorteilhaft ist es, wenn der Innendurchmesser d_{V1i} der ersten Verbindungsöffnung 16 deutlich kleiner ist als der Innendurchmesser d_{Ri} des Reaktionsrohrs 9, wobei insbesondere gilt: d_{V1i} ≤ 0,02 · d_{Ri}, insbesondere d_{V1i} ≤ 0,01 · d_{Ri}, insbesondere d_{V1i} ≤ 0,008 · d_{Ri}. Dadurch, dass der Innendurchmesser d_{V1i} der ersten Verbindungsöffnung 16 kleiner ist als der Innendurchmesser d_{Ri} der Reaktionsrohre 12, resultiert ein Kapillareffekt, der ein gleichmäßiges und homogen verteiltes Einströmen des Trägermediums auf den Vorraum 8 in die Reaktionsrohre 12 ermöglicht.

Die Reaktor-Vorrichtung 1 ist ein Rohrbündelreaktor mit vorgeschaltetem Verteilapparat. Der Verteilapparat wird durch den Vorraum 8 und die damit verbundenen ersten Verbindungsöffnungen 16 mit reduziertem Innendurchmesser d_{V1i} gebildet.

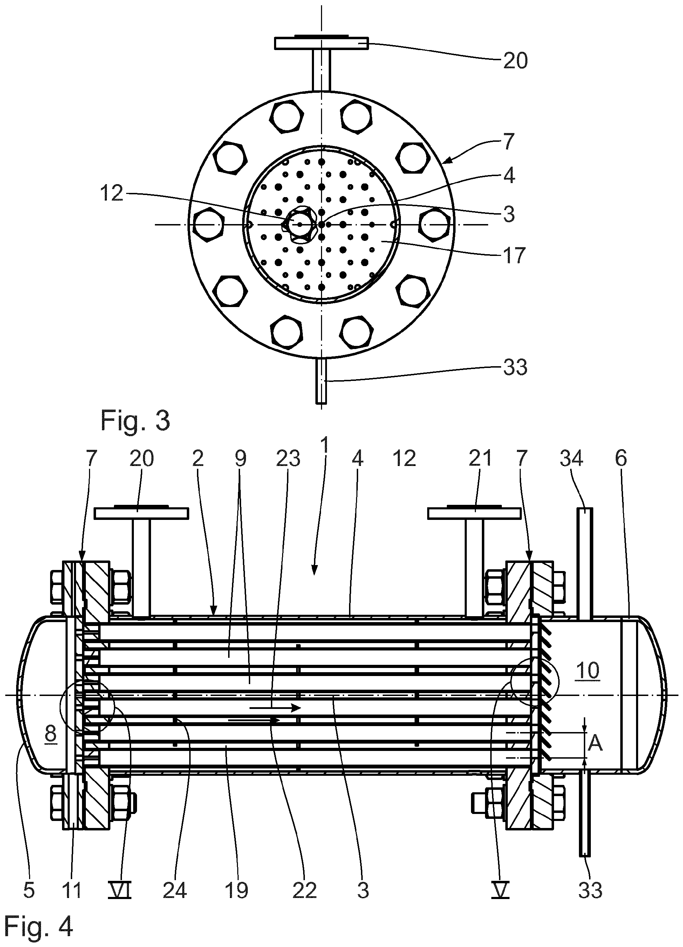

Innerhalb des Reaktionsgehäuses 14 sind die Reaktionsrohre 12 parallel und beabstandet zueinander in einer Richtung quer zur Längsachse 3 angeordnet. Der zwischen den Reaktionsrohren 12 gebildete Zwischenraum ist ein Wärmeübertragungsraum 19. Der Wärmeübertragungsraum 19 weist eine Wärmeübertragungsmediumzuführöffnung 20 und eine Wärmeübertragsmediumabführöffnung 21 auf. Das Wärmeübertragungsmedium strömt im Wesentlichen von der Wärmeübertragungsmediumzuführöffnung 20 zu der Wärmeübertragsmediumabführöffnung 21, gemäß Fig. 4 also von rechts nach links. Die Wärmeübertragungsmedium-Strömungsrichtung 22 ist in Fig. 4 gekennzeichnet. Das Trägermedium, das entlang der Reaktionsrohre 12 strömt, strömt vom Vorraum 8 durch den Reaktionsraum 9 in den Nachraum 10, gemäß der Darstellung in Fig. 4 also von links nach rechts gemäß der durch den Pfeil 23 symbolisierten Trägermedium-Strömungsrichtung. Die Trägermedium-Strömungsrichtung 23 und die Wärmeübertragungsmedium-Strömungsrichtung 22 sind antiparallel. Die Reaktor-Vorrichtung 1 wird im Gegenstromverfahren betrieben, was nachstehend noch erläutert wird.

Die Reaktionsrohre 12 sind im Reaktionsgehäuse 4 mittels mehrerer Fixierungen 24 fixiert. Fixierungen 24 gewährleisten eine definierte Anordnung der Reaktionsrohre 12. Insbesondere wird deren parallele Anordnung in dem Reaktionsgehäuse 4 gewährleistet. Zusätzlich sind die Fixierungen 24 derart ausgeführt, dass sie die Strömung des Wärmeübertragungsmediums derart beeinflussen, dass zumindest im Bereich der Fixierungen eine Kreuzströmung vorliegt. Die Fixierungen 24 wirken wie Umlenkelemente.

An einer dem Nachraum 10 zugewandten Stirnseite des Reaktionsraums 9 ist ein plattenförmiges Abdeckelement 25 vorgesehen. Das Abdeckelement 25 weist mehrere zweite Verbindungsöffnungen 26 auf, die jeweils einem Reaktionsrohr 12 zugeordnet sind. Über die zweite Verbindungsöffnung 26 ist das damit verbundene Reaktionsrohr 12 mit dem Nachraum 10 verbunden. Die zweite Verbindungsöffnung weist eine Querschnittfläche A_{V2} auf. Die zweite Verbindungsöffnung 26 ist im Wesentlichen halbkreisförmig ausgeführt. Der Radius R_{V2} der zweiten Verbindungsöffnung 26 entspricht im Wesentlichen dem halben Innendurchmesser d_{Ri} des Reaktionsrohres 12. Die Querschnittsfläche der zweiten Verbindungsöffnung 26 entspricht also im Wesentlichen der halben Querschnittsfläche des Reaktionsrohres 12. Die zweite Verbindungsöffnung 26 ist hinsichtlich einer vertikalen Orientierung derart an dem Reaktionsrohr 12 ausgerichtet, dass ein oben angeordneter Halbkreisabschnitt durch die zweite Verbindungsöffnung 26 freigelegt ist. Ein unten angeordneter Halbkreisabschnitt des Reaktionsrohres 12 ist durch einen Abdeckabschnitt 27 des Abdeckelements 25 verschlossen. Das bedeutet, dass jedes Reaktionsrohr 12 im Wesentlichen hälftig mit Trägermedium 28 gefüllt ist. Der Füllgrad kann auch geringer sein und beispielsweise etwa 45% oder etwa 40% betragen. Während der Dehydrierung freigesetztes Wasserstoffgas kann in den oberhalb des Trägermediums 28 freien Volumenabschnitt der Reaktionsrohre 12 ungehindert aufsteigen und entlang der Trägermedium-Strömungsrichtung 23 in den Vorraum 10 über die zweite Verbindungsöffnung 26 abströmen.

Entlang der Längsachse 3 ist an einer den Reaktionsrohren 12 abgewandten Stirnseite des Abdeckelements 25 eine Abscheideeinheit 29 vorgesehen. Das Abdeckelement 25 weist Befestigungsbohrungen 30 auf, um das Abdeckelement 25 am Reaktorgehäuse 2 zu befestigen, insbesondere anzuschrauben. Das Abdeckelement 25 und die Abscheideeinheit 29 können auch einteilig ausgeführt sein.

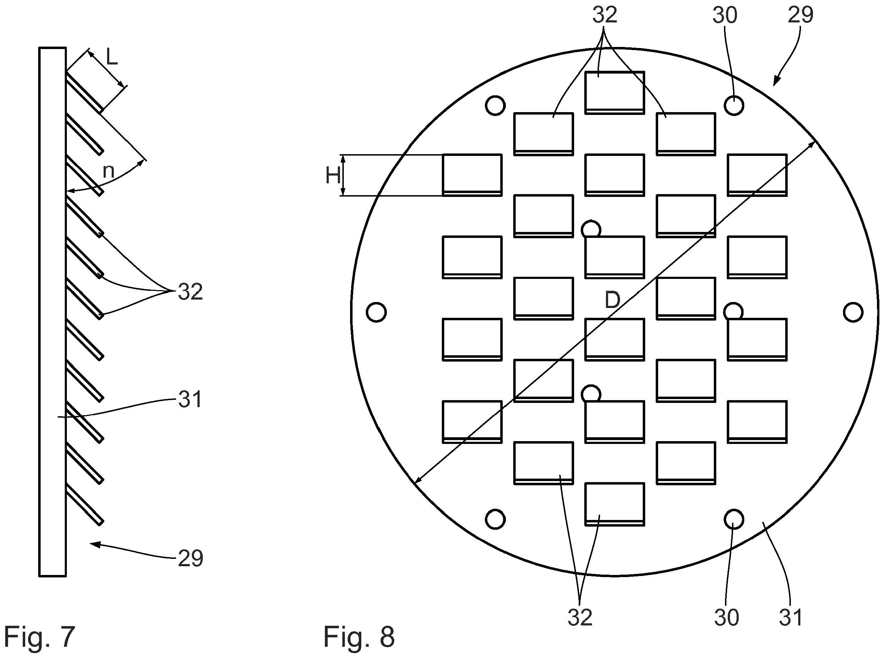

Die Abscheideeinheit 29 weist ein Trägerelement 31 mit mehreren daran angeordneten Abscheideelementen 32 auf. Jedes Abscheideelement 32 verdeckt eine in Fig. 8 nicht sichtbare Abscheideöffnung. Die Abscheideelemente 32 können auch unmittelbar an dem Abdeckelement 25 befestigt, insbesondere angeschweißt sein. Die Abscheideöffnung entspricht im Wesentlichen der zweiten Verbindungsöffnung 26. Die Abscheideöffnung kann auch eine größere Querschnittsfläche aufweisen als die zweite Verbindungsöffnung 26. Im Wesentlichen soll die Abscheideöffnung ein Abströmen des freigesetzten Wasserstoffgases aus dem Reaktionsrohr 12 in den Nachraum 10 nicht behindern. Das Trägerelement 31 ist eine kreisförmige Scheibe, deren Durchmesser D im Wesentlichen dem Durchmesser D des Abdeckelements 25 entspricht. Das Abdeckelement 25 und die Abscheideeinheit 29 können konzentrisch und fluchtend stirnseitig an den Reaktionsrohren 12 angeordnet und über die fluchtend angeordneten Befestigungsöffnungen 30 am Reaktorgehäuse 2 befestigt werden.

Die Abscheidelemente 32 sind jeweils als rechteckförmige Blechstreifen ausgeführt, die unter einem Neigungswinkel n gegenüber dem Trägerelement 31 geneigt angeordnet sind. Die Abscheideelemente 32 sind nach unten geneigt angeordnet. Gemäß dem gezeigten Ausführungsbeispiel beträgt der Neigungswinkel n etwa 30°. Der Neigungswinkel ist insbesondere größer als 0° und kleiner als 90°, insbesondere zwischen 10° und 60° und insbesondere zwischen 20° und 45°.

Die Abscheideelemente 32 weisen jeweils eine Höhe H auf, die einer senkrechten Projektion der Länge L der Abscheideelemente 32 in die Ebene des Trägerelements 31 entspricht. Die Höhe H der Abscheideelemente 32 beträgt insbesondere zwischen d_{Ri}/2 und d_{Ri} + A, insbesondere zwischen d_{Ri} und (d_{Ri}/2 + A) und insbesondere zwischen d_{Ri} und A.

Der Nachraum 10 weist eine Abströmöffnung 33 zum Abströmen von entladenem Trägermedium aus dem Nachraum 10 auf. Die Abströmöffnung 33 ist an einer unteren Bodenseitenwand des Nachraumgehäuses 6 angeordnet. Das flüssige Trägermedium kann selbsttätig infolge der Schwerkraft aus dem Nachraum 10 entweichen. Die Abströmöffnung 33 kann über eine Abströmleitung mit einem Speichertank für entladenes LOHC verbunden sein.

Der Nachraum 10 weist ferner eine Gasabströmöffnung 34 auf. Die Gasabströmöffnung 34 ist an einer oberen Seitenwand des Nachraumgehäuses 6 angeordnet. Das durch die Dehydrierung gebildete Wasserstoffgas kann selbsttätig über die oben angeordnete Gasabströmöffnung 34 entweichen und einer Weiterverwendung zugeführt werden.

In den Reaktionsrohren 12 ist jeweils ein Katalysator angeordnet. Ein für die Dehydrierung von LOHC geeigneter Katalysator ist beispielsweise aus EP 1 475 349 A2 bekannt.

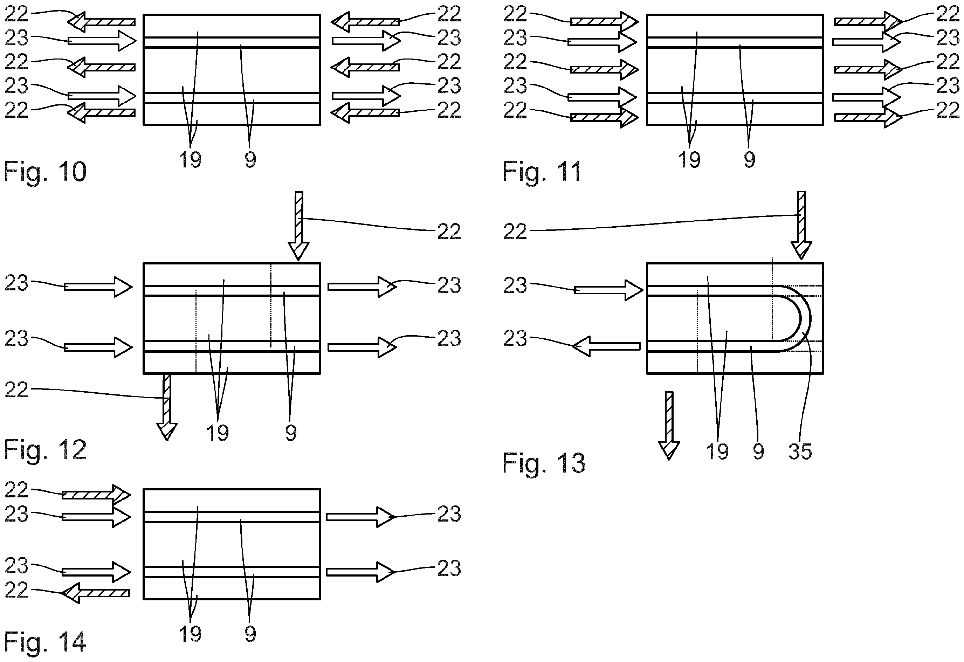

Nachfolgend wird anhand von Fig. 4 die Funktionsweise der Reaktor-Vorrichtung 1 näher erläutert. Über die Zuströmöffnung 11 wird geladenes Trägermedium zugeführt. Das beladene Trägermedium ist wasserstoffreich. Das beladene Trägermedium gelangt in den Vorraum 8 und von dort über die kapillarartig ausgeführten ersten Verbindungsöffnungen 16 in jeweils ein Reaktionsrohr 12. In den Reaktionsrohren 12 ist Katalysatormaterial angeordnet. In dem Reaktionsraum 9 wird Wärme über das Wärmeträgermedium aus dem Wärmeübertragungsraum 19 zugeführt. Dabei strömt das Wärmeträgermedium entgegen dem Trägermedium im Gegenstromverfahren, wie das gemäß Fig. 10 schematisch dargestellt ist. Das Gegenstromverfahren ist hinsichtlich der Wärmeübertragung besonders effektiv. Der Wirkungsgrad der Wärmeübertragung ist verbessert.

Dadurch, dass der Innendurchmesser der ersten Verbindungsöffnung derart reduziert ist, ist ein Rückströmen des Trägermediums aus dem Reaktionsraum 9 in den Vorraum 8 verhindert. Ein unkontrolliertes Ausströmen von Trägermedium aus dem Reaktionsraum 9 in den Nachraum 10 ist durch die Abdeckabschnitte 27 des Abdeckelements 25 gewährleistet. In Abhängigkeit der Größe, insbesondere der Höhe der Abdeckabschnitte 27, kann ein Füllstand des Trägermediums 28 in den Reaktionsrohren 12 festgelegt werden.

Dadurch, dass innerhalb der einzelnen Reaktionsrohre 9 ein ausreichendes freies Volumen zur Verfügung steht, kann abgetrenntes Wasserstoffgas über dieses freie Volumen und durch die zweiten Verbindungsöffnungen 26 in den Nachraum 10 entweichen. Dazu umströmt das Wasserstoffgas die Abscheideelemente 32. Unbeabsichtigt mit den Gasströmen mitgerissene Flüssigkeitsanteile des Trägermediums 28 werden dadurch abgeschieden. Das Trägermedium 28 kann an den Abscheideelementen 32 nach unten tropfen, in einem Sammelraum gesammelt und über die Abströmöffnung 33 abgeführt werden.

Nachfolgend werden anhand der Fig. 11 bis 14 weitere Strömungsverfahren zum Betrieb der Reaktor-Vorrichtung 1 erläutert.

Im Gegensatz zu dem Gegenstromverfahren ist ein Gleichstromverfahren möglich, bei dem die Wärmeübertragungsmedium-Strömungsrichtung 22 und die Trägermedium-Strömungsrichtung 23 parallel und gleichgerichtet orientiert sind. Dieses Strömungsschema ist in Fig. 11 dargestellt.

Bei einem Kreuzstrom gemäß Fig. 12 ist die Trägermedium-Strömungsrichtung 23 im Wesentlichen horizontal und die Wärmeübertragungsmedium-Strömungsrichtung 22 serpentinenartig, im Wesentlichen quer dazu ausgeführt. Vorteilhaft ist es, wenn die Wärmeübertragungsmedium-Strömungsrichtung 22 quer zur Trägermedium-Strömungsrichtung 23, aber dennoch horizontal, orientiert ist.

Bei einer ersten, in Fig. 13 dargestellten Mischströmung ist die Trägermedium-Strömungsrichtung 23 entlang einer im Wesentlichen U-förmigen Reaktionsrohrleitung 12 geleitet. Diese Ausführungsform entspricht im Wesentlichen der Kreuzströmung gemäß Fig. 12, wobei innerhalb des Reaktorgehäuses 2 zwei innenliegende Enden der Reaktionsrohre 12 mit einem kreisbogenförmigen Verbindungsstück 35 miteinander verbunden sind.

Die in Fig. 14 dargestellte Mischströmung stellt eine Kombination des Gegenstromverfahrens gemäß Fig. 10 und des Gleichstromverfahrens gemäß Fig. 11 dar.

## Patentansprüche

1. Reaktor-Vorrichtung zum Dehydrieren eines Trägermediums umfassend
a. ein Reaktorgehäuse (2), in dem das Trägermedium angeordnet ist,
b. einen vom Reaktorgehäuse (2) umschlossenen Innenraum,
i. mit einem Vorraum (8), der eine Zuströmöffnung (11) zum Zuströmen von beladenem Trägermedium in den Vorraum (8) und mindestens eine erste Verbindungsöffnung (16) zum Abströmen des Trägermediums aus dem Vorraum (8) aufweist,
ii. mit einem über die mindestens eine erste Verbindungsöffnung (16) mit dem Vorraum (8) verbundenen Reaktionsraum (9),
c. einen zwischen dem Reaktorgehäuse (2) und dem Reaktionsraum (9) angeordneten Wärmeübertragungsraum (19) mit einem Wärmeübertragungsmedium zum Wärmeübertragen von dem Wärmeübertragungsmedium auf das Trägermedium (28),
d. mehrere jeweils einen Reaktionsraum (9) aufweisende Reaktionsrohre (12), die jeweils über eine erste Verbindungsöffnung (16) mit dem Vorraum (8) verbunden sind,
**dadurch gekennzeichnet, dass**
die Reaktionsrohre (12) horizontal orientiert sind,
das Trägermedium flüssig ist.

2. Reaktor-Vorrichtung gemäß Anspruch 1, **dadurch gekennzeichnet, dass** die mindestens eine erste Verbindungsöffnung (16) einen Innendurchmesser (d_{V1i}) aufweist, der kleiner ist als ein Innendurchmesser (d_{Ri}) des damit verbundenen Reaktionsrohres (12), wobei insbesondere gilt: d_{V1i} ≤ 0,05 · d_{Ri}, insbesondere d_{V1i} ≤ 0,02 · d_{Ri}, insbesondere d_{V1i} ≤ 0,01 · d_{Ri} und insbesondere d_{V1i} ≤ 0,008 · d_{Ri}.

3. Reaktor-Vorrichtung gemäß einem der vorstehenden Ansprüche, **dadurch gekennzeichnet, dass** das mindestens eine Reaktionsrohr (12) parallel zu einer Längsachse (3) des Reaktorgehäuses (2) orientiert ist.

4. Reaktor-Vorrichtung gemäß einem der vorstehenden Ansprüche, **dadurch gekennzeichnet, dass** die mindestens eine erste Verbindungsöffnung (16) in einem Verbindungselement (13) integriert ausgeführt ist, wobei insbesondere das Verbindungselement (13) stirnseitig mit dem Reaktionsrohr (12) verbunden ist und insbesondere stirnseitig in das Reaktionsrohr (12) eingesteckt ist.

5. Reaktor-Vorrichtung gemäß Anspruch 4, **dadurch gekennzeichnet, dass** das Verbindungselement (13) mittels einer Halteplatte (17) an dem Reaktionsrohr (12) axial befestigt ist.

6. Reaktor-Vorrichtung gemäß einem der vorstehenden Ansprüche, **gekennzeichnet durch** einen Nachraum (10), der eine Abströmöffnung (33) zum Abströmen von entladenem Trägermedium (28) aus dem Nachraum (10) und mindestens eine zweite Verbindungsöffnung (26) zum Zuströmen des entladenen Trägermediums aus dem Reaktionsrohr (12) in den Nachraum (10) aufweist.

7. Reaktor-Vorrichtung gemäß Anspruch 6, **dadurch gekennzeichnet, dass** das Reaktionsrohr (12) über die mindestens eine zweite Verbindungsöffnung (26) mit dem Nachraum (10) verbunden ist.

8. Reaktor-Vorrichtung gemäß Anspruch 6 oder 7, **dadurch gekennzeichnet, dass** die mindestens eine zweite Verbindungsöffnung (26) eine Querschnittsfläche (A_{V2}) aufweist, die kleiner ist als eine Querschnittsfläche (A_{R}) des damit verbundenen Reaktionsrohres (12), wobei insbesondere gilt: A_{V2} ≤ 0,6 · A_{R}, insbesondere A_{V2} ≤ 0,55 · A_{R}, insbesondere A_{V2} ≤ 0,5 · A_{R} und insbesondere A_{V2} ≤ 0,45 · A_{R}.

9. Reaktor-Vorrichtung gemäß einem der Ansprüche 6 bis 8, **dadurch gekennzeichnet, dass** die mindestens eine zweite Verbindungsöffnung (26) in einem Abdeckelement (25) integriert ausgeführt ist, wobei insbesondere das Abdeckelement (25) stirnseitig mit dem Reaktionsrohr (12) verbunden ist und insbesondere stirnseitig an dem Reaktionsrohr (12) anliegt.

10. Reaktor-Vorrichtung gemäß einem der Ansprüche 6 bis 9, **gekennzeichnet durch** ein der mindestens einen zweiten Verbindungsöffnung (26) zugeordnetes Abscheideelement (32), das insbesondere bezüglich der Längsachse (3) fluchtend zu der mindestens einen zweiten Verbindungsöffnung (26) angeordnet ist.

11. Reaktor-Vorrichtung gemäß Anspruch 10, **dadurch gekennzeichnet, dass** das Abscheideelement (32) an dem Abdeckelement (25), insbesondere an einer dem Reaktionsrohr (12) abgewandten Stirnseite des Abdeckelements (25), befestigt ist.

12. Reaktor-Vorrichtung gemäß Anspruch 10 oder 11, **dadurch gekennzeichnet, dass** das Abscheideelement (32) bezüglich der Längsachse (3) mit einem Neigungswinkel (n) angeordnet ist, wobei insbesondere gilt: 0° < n < 90°, insbesondere 10° ≤ n ≤ 60° und insbesondere 20° ≤ n ≤ 45°.

13. Reaktor-Vorrichtung gemäß einem der vorstehenden Ansprüche, **dadurch gekennzeichnet, dass** in dem Reaktionsrohr (12) ein Dehydrierkatalysator angeordnet ist.

14. Reaktor-Vorrichtung gemäß einem der vorstehenden Ansprüche, **dadurch gekennzeichnet, dass** eine Trägermedium-Strömungsrichtung (23), die durch ein Reaktionsrohr (12) vorgegeben ist, und eine Wärmeübertragungsmedium-Strömungsrichtung (22), die zwischen einer Wärmeübertragungsmediumzuführöffnung (20) und einer Wärmeübertragung smediumabführöffnung (21) orientiert ist, zumindest abschnittsweise parallel und insbesondere im Kreuzstrom orientiert sind.

15. Verfahren zum Dehydrieren eines Trägermediums in einer Reaktor-Vorrichtung gemäß einem der vorherstehenden Ansprüche, umfassend die Verfahrensschritte
- Zuführen von beladenem flüssigem Trägermedium über eine Zuströmöffnung (11) in einen Vorraum (8) der Reaktor-Vorrichtung (1) und von dort über Verbindungsöffnungen (16) in jeweils ein horizontal orientiertes Reaktionsrohr (12),
- Zuführen von Wärme über ein Wärmeträgermedium aus einem Wärmeübertragungsraum (19) der Reaktor-Vorrichtung (1) in die Reaktionsrohre (12),
- Freisetzen von Wasserstoffgas aus dem flüssigen Trägermedium in den Reaktionsrohren (12).

## Claims

1. Reactor apparatus for dehydrogenating a carrier medium comprising
a. a reactor housing (2) in which the carrier medium is arranged,
b. an interior space which is enclosed by the reactor housing (2),
i. with a preliminary space (8), which has an inflow opening (11) for inflow of loaded carrier medium into the preliminary space (8) and at least one first connecting opening (16) for outflow of the carrier medium from the preliminary space (8),
ii. with a reaction space (9) connected via the at least one first connecting opening (16) to the preliminary space (8),
c. a heat transfer space (19) which is arranged between the reactor housing (2) and the reaction space (9) and contains a heat transfer medium for transfer of heat from the heat transfer medium to the carrier medium (28),
d. a plurality of reaction tubes (12), which each have a reaction space (9) and are each connected via a first connecting opening (16) to the preliminary space (8),
**characterized in that**
the reaction tubes (12) are oriented horizontally,
the carrier medium is liquid.

2. Reactor apparatus according to claim 1, **characterized in that** the at least one first connecting opening (16) has an internal diameter (d_{V1i}) which is smaller than an internal diameter (d_{Ri}) of the reaction tube (12) connected thereto, where, in particular: d_{V1i} ≤ 0.05 · d_{Ri}, in particular d_{V1i} ≤ 0.02 · d_{Ri}, in particular d_{V1i} ≤ 0.01 · d_{Ri} and in particular d_{V1i} ≤ 0.008 · d_{Ri}.

3. Reactor apparatus according to any one of the preceding claims, **characterized in that** the at least one reaction tube (12) is oriented parallel to a longitudinal axis (3) of the reactor housing (2).

4. Reactor apparatus according to any one of the preceding claims, **characterized in that** the at least one first connection opening (16) is designed to be integrated in a connecting element (13), wherein in particular the connecting element (13) is connected at the end face to the reaction tube (12) and in particular is plugged into the reaction tube (12) at the end face.

5. Reactor apparatus according to claim 4, **characterized in that** the connecting element (13) is fastened axially by means of a holding plate (17) to the reaction tube (12).

6. Reactor apparatus according to any one of the preceding claims, **characterized by** an after-space (10) which has an outflow opening (33) for outflow of unloaded carrier medium (28) from the after-space (10) and at least one second connecting opening (26) for inflow of the unloaded carrier medium from the reaction tube (12) into the after-space (10).

7. Reactor apparatus according to claim 6, **characterized in that** the reaction tube (12) is connected via the at least one second connecting opening (26) to the after-space (10).

8. Reactor apparatus according to claim 6 or 7, **characterized in that** the at least one second connecting opening (26) has a cross-sectional area (A_{V2}) which is smaller than a cross-sectional area (A_{R}) of the reaction tube (12) connected thereto, where, in particular A_{V2} ≤ 0.6 · A_{R}, in particular A_{V2} ≤ 0.55 · A_{R}, in particular A_{V2} ≤ 0.5 · A_{R} and in particular A_{V2} ≤ 0.45 · A_{R}.

9. Reactor apparatus according to any one of claims 6 to 8, **characterized in that** the at least one second connection opening (26) is designed to be integrated into a covering element (25), wherein in particular the covering element (25) is connected at the end face to the reaction tube (12) and, in particular, adjoins the reaction tube (12) at the end face.

10. Reactor apparatus according to any one of claims 6 to 9, **characterized by** a precipitation element (32) which is assigned to the at least one second connecting opening (26) and, in particular, is arranged, with respect to the longitudinal axis (3), flush with the at least one second connecting opening (26).

11. Reactor apparatus according to claim 10, **characterized in that** the precipitation element (32) is fastened to the covering element (25), in particular to an end face of the covering element (25) facing away from the reaction tube (12).

12. Reactor apparatus according to claim 10 or 11, **characterized in that** the precipitation element (32) is arranged at an angle of inclination (n) relative to the longitudinal axis (3), where, in particular: 0° < n < 90°, in particular 10° ≤ n ≤ 60° and in particular 20° ≤ n ≤ 45°.

13. Reactor apparatus according to any one of the preceding claims, **characterized in that** a dehydrogenation catalyst is provided in the reaction tube (12).

14. Reactor apparatus according to any one of the preceding claims, **characterized in that** a carrier medium flow direction (23), which is predetermined by a reaction tube (12), and a heat transfer medium flow direction (22), which is oriented between a heat transfer medium supply opening (20) and a heat transfer medium discharge opening (21), are, at least in sections, oriented parallel and in particular in cross-current.

15. A method of dehydrogenating a carrier medium in a reactor apparatus according to any one of the preceding claims, comprising the steps of
- feeding of loaded liquid carrier medium via an inflow opening (11) into a preliminary space (8) of the reactor apparatus (1) and from there via connecting openings (16) into a horizontally oriented reaction tube (12) in each case,
- feeding heat via a heat transfer medium from a heat transfer space (19) of the reactor apparatus (1) into the reaction tubes (12),
- release of hydrogen gas from the liquid carrier medium in the reaction tubes (12).

## Revendications

1. Dispositif réacteur destiné à la déshydrogénation d'un milieu porteur, comprenant
a. une enceinte de réacteur (2) dans laquelle est disposé le milieu porteur,
b. un espace intérieur entouré par l'enceinte du réacteur (2),
i. avec un espace avant (8) qui présente un orifice d'afflux (11) pour l'afflux de milieu porteur chargé dans l'espace avant (8) et au moins un premier orifice de liaison (16) pour l'écoulement du milieu porteur hors de l'espace avant (8),
ii. avec un espace de réaction (9) relié à l'espace avant (8) par l'intermédiaire d'au moins un premier orifice de liaison (16),
c. un espace de transfert de chaleur (19) disposé entre l'enceinte de réacteur (2) et l'espace de réaction (9), avec un milieu de transfert de chaleur destiné au transfert de chaleur du milieu de transfert de chaleur au milieu porteur (28),
d. plusieurs tubes de réaction (12) présentant chacun un espace de réaction (9), qui sont reliés chacun à l'espace avant (8) par un premier orifice de liaison (16),
**caractérisé en ce que**
lesdits tubes de réaction (12) sont orientés horizontalement,
ledit milieu porteur est liquide.

2. Dispositif réacteur selon la revendication 1, **caractérisé en ce que** ledit au moins un premier orifice de liaison (16) a un diamètre intérieur (d_{V1i}) qui est inférieur à un diamètre intérieur (d_{Ri}) du tube de réaction (12) relié à celui-ci, dans lequel en particulier : d_{V1i} ≤ 0,05 · d_{Ri}, en particulier d_{V1i} ≤ 0,02 · d_{Ri}, en particulier d_{V1i} ≤ 0,01 · d_{Ri} et en particulier d_{V1i} ≤ 0,008 · d_{Ri}.

3. Dispositif réacteur selon l'une quelconque des revendications précédentes, **caractérisé en ce que** ledit au moins un tube de réaction (12) est orienté parallèlement à un axe longitudinal (3) de l'enceinte de réacteur (2).

4. Dispositif réacteur selon l'une quelconque des revendications précédentes, **caractérisé en ce que** ledit au moins un premier orifice de liaison (16) est réalisé de manière intégrée dans un élément de liaison (13), dans lequel en particulier l'élément de liaison (13) est relié frontalement au tube de réaction (12) et en particulier est enfiché frontalement dans le tube de réaction (12).

5. Dispositif réacteur selon la revendication 4, **caractérisé en ce que** ledit élément de liaison (13) est fixé axialement au tube de réaction (12) au moyen d'une plaque de retenue (17).

6. Dispositif réacteur selon l'une quelconque des revendications précédentes, **caractérisé par** un espace aval (10) qui présente un orifice d'écoulement (33) destiné à l'écoulement du milieu porteur déchargé (28) hors de l'espace aval (10) et au moins un deuxième orifice de liaison (26) pour l'afflux du milieu porteur déchargé depuis le tube de réaction (12) dans l'espace aval (10).

7. Dispositif réacteur selon la revendication 6, **caractérisé en ce que** ledit tube de réaction (12) est relié à l'espace aval (10) par l'intermédiaire dudit au moins un deuxième orifice de liaison (26).

8. Dispositif réacteur selon la revendication 6 ou 7, **caractérisé en ce que** ledit au moins un deuxième orifice de liaison (26) présente une surface de section transversale (A_{V2}) qui est inférieure à une surface de section transversale (A_{R}) du tube de réaction (12) relié à celle-ci, dans lequel en particulier : A_{V2} ≤ 0,6 · A_{R}, en particulier A_{V2} ≤ 0,55 · A_{R}, en particulier A_{V2} ≤ 0,5 · A_{R} et en particulier A_{V2} ≤ 0,45 · A_{R}.

9. Dispositif réacteur selon l'une quelconque des revendications 6 à 8, **caractérisé en ce que** ledit au moins un deuxième orifice de liaison (26) est réalisé de manière intégrée dans un élément de recouvrement (25), dans lequel en particulier l'élément de recouvrement (25) est relié frontalement au tube de réaction (12) et s'applique en particulier frontalement contre le tube de réaction (12).

10. Dispositif réacteur selon l'une quelconque des revendications 6 à 9, **caractérisé par** un élément de précipitation (32) associé audit au moins un deuxième orifice de liaison (26) et disposé en particulier en alignement avec ledit au moins un deuxième orifice de liaison (26) par rapport à l'axe longitudinal (3).

11. Dispositif réacteur selon la revendication 10, **caractérisé en ce que** ledit élément de précipitation (32) est fixé à l'élément de recouvrement (25), en particulier à une face frontale de l'élément de recouvrement (25) opposée au tube de réaction (12).

12. Dispositif réacteur selon la revendication 10 ou 11, **caractérisé en ce que** ledit élément de précipitation (32) est disposé par rapport à l'axe longitudinal (3) avec un angle d'inclinaison (n), dans lequel en paticulier: 0° < n < 90°, en particulier 10° ≤ n ≤ 60° et en particulier 20° ≤ n ≤ 45°.

13. Dispositif réacteur selon l'une quelconque des revendications précédentes, **caractérisé en ce qu'**un catalyseur de déshydrogénation est disposé dans le tube de réaction (12).

14. Dispositif réacteur selon l'une quelconque des revendications précédentes, **caractérisé en ce qu'**une direction du flux de milieu porteur (23), qui est prédéfinie par un tube de réaction (12), et une direction du flux de milieu de transfert de chaleur (22), qui est orientée entre un orifice d'alimentation en milieu de transfert de chaleur (20) et un orifice d'évacuation de milieu de transfert de chaleur (21), sont orientées au moins par sections parallèlement et en particulier en courant croisé.

15. Procédé de déshydrogénation d'un milieu porteur dans un dispositif réacteur selon l'une quelconque des revendications précédentes, comprenant les étapes de procédé suivantes
- l'amenée d'un milieu porteur liquide chargé, par l'intermédiaire d'un orifice d'afflux (11) dans un espace avant (8) du dispositif réacteur (1) et de là, par l'intermédiaire d'orifices de liaison (16), dans respectivement un tube de réaction (12) orienté horizontalement,
- l'amenée de chaleur par l'intermédiaire d'un milieu porteur de chaleur depuis un espace de transfert de chaleur (19) du dispositif réacteur (1) dans les tubes de réaction (12),
- libération d'hydrogène gazeux à partir du milieu porteur liquide dans les tubes de réaction (12).
